# EUROPÄISCHE PATENTANMELDUNG

(11) **EP 2 050 968 A1**
(43) Veröffentlichungstag der Anmeldung: **22.04.2009**
(21) Anmeldenummer: 07020503.4
(22) Anmeldetag: 19.10.2007
(51) Int. Cl.: F04D 17/12, F04D 29/42, F04D 29/62, F01D 9/02, F01D 25/24, F16J 13/02

(54) **Druckbehälter mit einem Deckel**

(71) Anmelder: SIEMENS AKTIENGESELLSCHAFT, 80333 München (DE)
(72) Erfinder: Geissner, Jürgen, 47228 Duisburg (DE); Nass, Dieter, 47447 Moers (DE)

(57) **Zusammenfassung**

Die Erfindung betrifft einen Druckbehälter (1) mit einem Deckel (3), insbesondere Druckbehälter (1) einer Turbomaschine (Turboverdichter 4), insbesondere mit einem als Einströmspirale (7) ausgebildeten Deckel (3), welcher Deckel (3) an einer entsprechenden Deckelaufnahme (2) befestigt ist, wobei der Deckel (3) eine sich in Umfangsrichtung erstreckende.erste Anlagefläche (10) aufweist, welche mit einer zweiten Anlagefläche (11) an dem Druckbehälter (1) dichtend zusammenwirkt, wobei Befestigungselemente (12) zur Befestigung es Deckels (3) an dem Druckbehälter (1) vorgesehen sind. Herkömmliche Druckbehälter mit Deckeln sehen sehr aufwendige und raumgreifende Deckelbefestigungen vor. He schafft die Erfindung Abhilfe, idem die Befestigungselemente (12) keilförmig ausgebildet sind, einerseits an einer Widerlagerfläche (19) des Druckbehälters (1) anliegen und andererseits an einer Kontaktfläche (18) des Deckels (3) anliegen, derart dass eine Verschiebung des Befestigungselements (12) in eine Richtung, dass ein breiterer Abschnitt der Keilform sich zwischen der Widerlagerfläche (19) und der Kontaktfläche (18) befindet, die Anlageflächen (10,11) näher zusammen bringt oder gegeneinander verspannt.

## Beschreibung

Die Erfindung betrifft einen Druckbehälter mit einem Deckel, insbesondere einen Druckbehälter einer Turbomaschine, insbesondere Turboverdichtergehäuse mit einem als Einströmspirale ausgebildeten Deckel, welcher Deckel an einer entsprechenden Deckelaufnahme befestigt ist, wobei der Deckel eine sich in Umfangsrichtung erstreckende erste Anlagefläche aufweist, welche mit einer zweiten Anlagefläche an den Druckbehälter zusammenwirkt und wobei Befestigungselemente zur Befestigung des Deckels an dem Druckbehälter vorgesehen sind.

Das Verschießen von Druckbehältern mittels Verschlusselementen, beispielsweise mittels Deckeln, welche eine Zugänglichkeit zum Inneren des Druckbehälters ohne Zerstörung desselben ermöglichen, ist ein viel bearbeitetes technische Problem, welches mit zunehmender Größe von Druckbehältern bei steigenden Drücken sich stetig erneuert. Das Problem verschärft sich zusätzlich, wenn der Druckbehälter nicht nur der schlichten Speicherung eines unter Druck stehenden Mediums dient, sondern auch zusätzliche Anforderungen erfüllen muss. Bei einer Turbomaschine, beispielsweise eines Turbokompressors ist die zusätzliche Aufgabe gestellt, die Befestigungselemente zum Verschließen des Druckbehälters nicht mit anderen Bauelementen kollidieren zu lassen. Soll der Deckel selbst darüber hinaus den Druckbehälter nicht nur verschließen sondern ggf. auch als Träger von Funktionsbauteilen dienen, beispielsweise als Träger eines Lagers für den Rotor einer Turbomaschine, welcher Rotor durch den Deckel hindurch geführt ist, wobei mittels einer Wellendichtung der Spalt zwischen dem Deckel und dem Rotor abgedichtet ist, sind an die Steifigkeit des Deckels selbst und dessen Befestigung besondere Anforderungen zu stellen, damit keine ungewollten Verlagerungen der Funktionsbauteile stattfinden. Eine weitere Anforderung bei besonders großen Druckbehältern der vorbeschriebenen Art besteht darin, dass angesichts des sehr hohen Gewichts eines Deckels für einen Druckbehälter die Montage unter auf einer Baustelle vorzufindenden Randbedingungen zu bewerkstelligen sein muss. Ist hierbei der Deckel gleichzeitig Träger zusätzlicher Funktionsmodule, welche ihrerseits auch ein hohes Gewicht aufweisen können, muss das Erfordernis von Verlagerungen des Deckels im Rahmen der Montageprozedur auf ein Mindestmaß eingeschränkt werden, um eine beschädigungsfreie Montage unter realistischen Bedingungen durchführen zu können.

Ausgehend von den zuvor beschriebenen Problemen liegt der Erfindung die Aufgabe zugrunde, einen Druckbehälter der eingangs genannten Art zu schaffen, bei welchem trotz großer Abmaße und hohen Innendrucks eine Dichtigkeit zuverlässig gewährleistet werden kann und der Deckel trotz eines potenziell hohen Eigengewichts raumsparend an dem Druckbehälter mit einem hohen Maß an Genauigkeit befestigt werden kann.

Zur Lösung der erfindungsgemäßen Aufgabe wird vorgeschlagen, dass die Befestigungselemente an einem Druckbehälter der vorgenannten Art keilförmig ausgebildet sind und einerseits an einer Widerlagerfläche des Druckbehälters anliegen und andererseits an einer Kontaktfläche des Deckels anliegen, derart, dass eine Verschiebung des Befestigungselements in eine Richtung, dass ein breiterer Abschnitt der Keilform sich zwischen der Widerlagerfläche und der Kontaktfläche befindet, die Anlagefläche näher zusammenbringt oder gegeneinander verspannt.

Herkömmliche Druckbehälter sehen regelmäßig eine flanschartige Verschraubung des Deckels mit einer Deckelaufnahme für den Deckel vor, wobei mit zunehmendem Innendruck und Größe des Deckels diese Flanschschrauben in großer Anzahl mit geringem Abstand in Umfangsrichtung und großem Durchmesser einzusetzen sind. Der von den Flanschbohrungen darüber hinaus geschwächte Flansch der Deckelaufnahme bzw. des Deckels muss außerdem eine gewaltige Wandstärke aufweisen, um den Belastungen standzuhalten. Auch ist die Montage derartiger Konstruktionen aufwendig, da die Flanschschrauben regelmäßig mittels besonderer Gerätschaften in den gewünschten Vorspannungszuständ gebracht werden müssen. Das erfindungsgemäß keilförmige Befestigungselement ermöglicht dagegen eine raumsparende Befestigung des Deckels an dem Druckbehälter mit nur geringem Aufwand.

Besonders zweckmäßig ist es hierbei, wenn der Deckel vergleichsweise im Inneren des Druckbehälters angeordnet ist, so dass die erste Anlagefläche des Deckels gegenüberliegend der zweiten Anlagefläche des Druckbehälters nach außen weist und von der Flächenlast auf den Deckel die beiden Anlageflächen bei innerem Überdruck gegeneinander verspannt werden. Auf diese Weise ist das keilförmige Befestigungselement lediglich für die Aufgabe zu dimensionieren, den Deckel in der richtigen Position zu dem Druckbehälter zu halten und insbesondere die quer zu den Anlageflächen auftretende Last abzufangen bzw. die Anlageflächen auch ohne anliegenden Innendruck derart normal gegeneinander zu verspannen, dass die dadurch erzeugte Haftreibungskraft ausreicht, eine Relativbewegung zwischen diesen beiden Flächen zu verhindern.

Eine vorteilhafte Weiterbildung der Erfindung sieht vor, dass die Flächennormale der Auflagefläche parallel ist zu einer Ebenennormale einer durch den Umfang des Deckels aufgespannten Ebene. Auf diese Weise kann eine normale flächige Dichtung verwendet werden, um zuverlässige Dichtheit zu gewährleisten.

Wesentliche Vorteile bringt eine sich zumindest abschnittsweise in Umfangsrichtung erstreckende nach radial außen offene U-förmige Profilkontur des Deckels, in welcher sich im zusammengebauten Zustand ein sich zumindest abschnittsweise nach radial innen erstreckender Formsteg des Druckbehälters befindet, wobei an einer seitlichen Innenseite der U-förmigen Profilkontur die erste Anlagefläche ausgebildet ist und dieser gegenüberliegend die zweite Anlagefläche an dem Formsteg angeordnet ist. Ein wesentlicher Vorteil dieser Ausbildung des Deckels liegt darin, dass der Deckel von einem Überdruck im Behälterinneren derart nach außen gedrückt wird, dass die Anlageflächen zu einer dichtenden Anlage zueinander verspannt werden. Ein weiterer Vorteil liegt darin, dass die U-förmige Profilkontur ein Einsetzen des Befestigungselements neben dem Formsteg des Druckbehälters ermöglicht und auf diese Weise - vorausgesetzt die Anlageflächen befinden sich im Inneren des Druckbehälters - das Befestigungselement mit seiner Keilform gut zugänglich außen in der U-Form neben dem Formsteg angebracht werden kann. Die Kombination dieser beiden Vorteile, das Verspannen der Anlageflächen gegeneinander aufgrund des Innendrucks und die gute Zugänglichkeit des Befestigungselements infolge.der Außenlage, können mit keiner anderen Gestaltung des Deckels bzw. Druckbehälters erreicht werden.

Sowohl die Profilkontur als auch der Formsteg können über den Umfang derartig abschnittsweise ausgebildet sein, dass eine bajonettartige Einsetzung des Deckels in die Deckelaufnahme erfolgen kann, also zunächst eine Translation und dann eine Drehung des Deckels. Eine derartige Ausbildung kommt vor allem dann in Frage, wenn keine zusätzlichen besonderen Funktionsmodule an dem Deckel dies erschweren.

Eine besonders vorteilhafte Weiterbildung ergibt sich jedoch, wenn sich sowohl die Profilkontur mit der ersten Anlagefläche als auch der Formsteg der zweiten Anlagefläche über den gesamten Umfang des Deckels erstrecken. Auf diese Weise wird die Anbindung des Deckels an den Druckbehälter besonders robust.

Weist der Deckel die U-förmige Profilkontur auf, sieht eine besonders vorteilhafte Weiterbildung vor, dass das Befestigungselement in der U-Form der Profilkontur angeordnet ist und sich die Widerlagerfläche des Deckels an der der zweiten Anlagefläche gegenüberliegenden Flanke der U-Form befindet und die Kontaktfläche des Druckbehälters an dem Formsteg jenseits der zweiten Anlagefläche, so dass das Befestigungselement zwischen Kontaktfläche und Widerlagerfläche angeordnet ist. ???

Die Güte der Befestigung des Deckels an dem Druckbehälter erhöht sich zusätzlich wenn die Kontaktfläche und die Widerlagerfläche miteinander einen Keilspalt mit einem dem Keilwinkel des Befestigungselements entsprechenden Winkel bilden.

Vorteilhaft kann das Befestigungselement eine Schraube aufweisen, mittels derer es in den Keilspalt gedrückt oder gepresst und dort gesichert werden kann. Ggf. weist ein Befestigungselement mehrere Schrauben auf, die sich vorzugsweise durch eine Durchgangsbohrung des Befestigungselementes erstrecken und beispielsweise auf dem Grunde der U-Form der Profilkontur in eine Gewindebohrung eingeschraubt sind.

Zweckmäßig weist das sich vorzugsweise in Umfangsrichtung erstreckende Befestigungselement eine Ringsegmentform auf, mit keilförmigem Querschnittsprofil, wobei sich die Keilform nach radial innen verjüngt. Für einen symmetrischen Kraftfluss über das Befestigungselement ist es sinnvoll, wenn über den Umfang entlang der Deckelaufnahme mehrere Befestigungselemente vorgesehen sind.

Zweckmäßig weist der Druckbehälter eine Teilfuge auf, welche die Behälteranlage teilt. Die Teilung der Behälteranlage bzw. des Druckbehälters erfolgt vorzugsweise derart, dass die Behälteranlage in wenigstens zwei annähernd gleiche Teile, vorzugsweise Halbringe gegliedert ist. Der Vorteil besteht darin, dass in einer Behälterhälfte der Deckel mit nach außen weisender erster Anlagefläche eingesetzt werden kann, bevor die zweite Behälterhälfte aufgesetzt wird und auf diese Weise den Deckel zumindest formschlüssig mittels der zweiten Anlagefläche an den Druckbehälter verankert.

Für ein Höchstmaß an Genauigkeit der Positionierung des Deckels gegenüber dem Druckbehälter ist es möglich, wenn der Deckel gegenüber dem Druckbehälter mittels Zentrierelementen zentriert ist. Dies ist insbesondere zweckmäßig, wenn der Deckel Träger eines Lagers eines sich durch den Deckel erstreckenden Rotors ist. Besonders zweckmäßig kann die Erfindung eingesetzt werden, wenn der Deckel ggf. zusätzlich Träger einer Einströmspirale für einen in dem Druckbehälter befindlichen Verdichter ist. Das hohe Gewicht der Einströmspirale kann mittels der erfindungsgemäßen Befestigung ohne besonders großen Montageaufwand an dem Druckbehälter befestigt werden.

Im Folgenden ist die Erfindung anhand eines speziellen Ausführungsbeispiels unter Bezugnahme auf Zeichnungen verdeutlicht. Es zeigen:
- FIG 1: zeigt einen Schnitt durch ein Teil eines Verdichters mit einer Behälteranlage eines Druckbehälters, wobei der an der Behälteranlage angebrachte Deckel, Träger eines Lagers für einen Verdichterrotor und eine Einströmspirale ist,

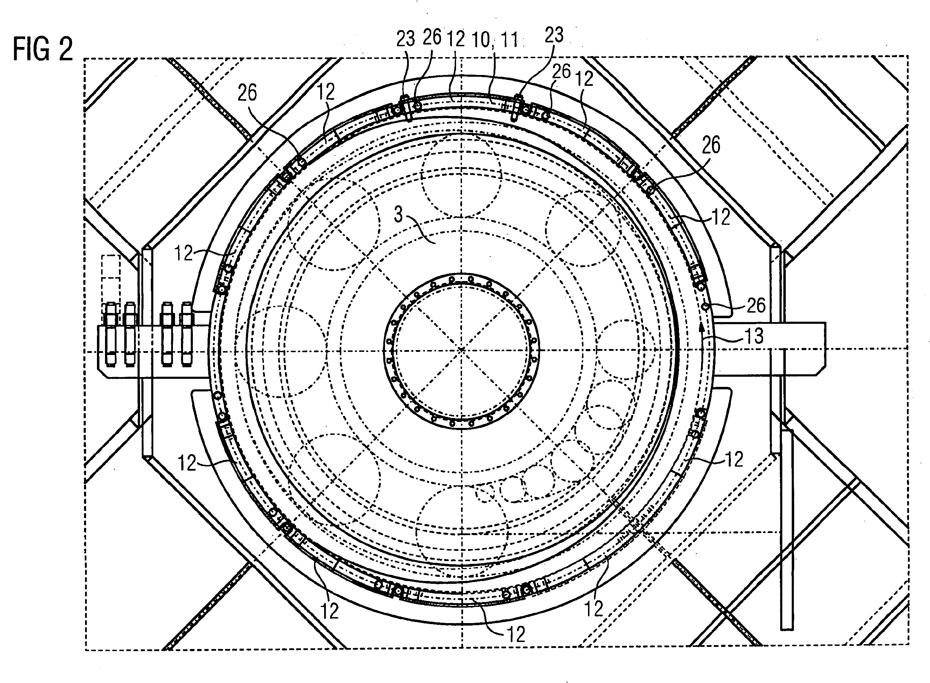

- FIG 2: eine Sicht in axialer Richtung der Achse des in FIG 1 dargestellten Rotors auf Einzelheiten der Befestigung des Deckels an dem Druckbehälter,
- FIG 3: eine Schnittdarstellung, welche im Detail das Zusammenwirken des Befestigungselementes mit dem Deckel und der Behälteranlage des Druckbehälters zeigt und
- FIG 4: ein keilförmiges Ringsegment eines Befestigungselements.

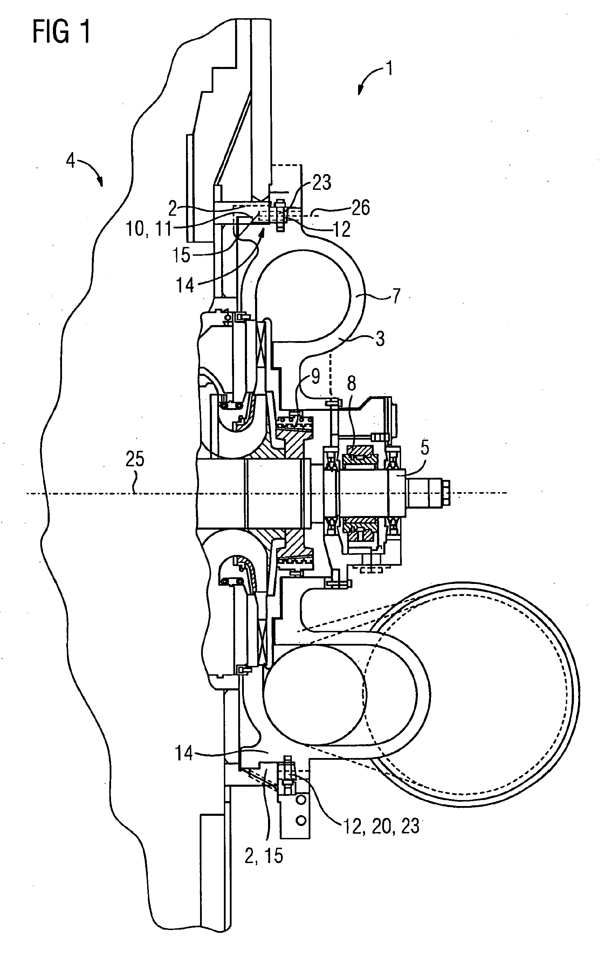

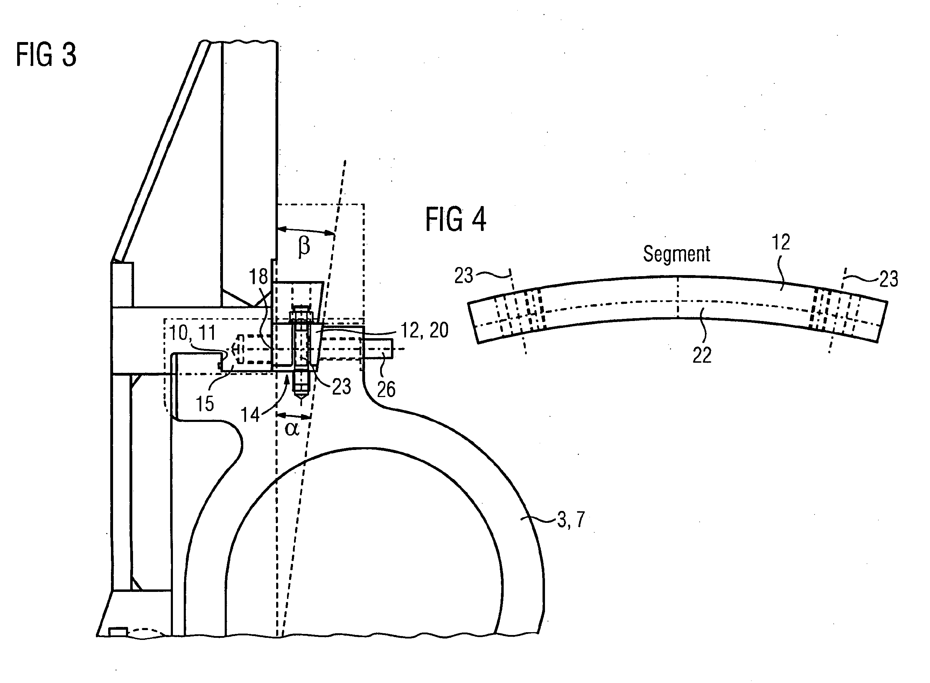

FIG 1 zeigt einen Druckbehälter 1, der bis auf einen Bereich einer Deckelaufnahme 2 zur Aufnahme eines Deckels 3 des Behälters nur angedeutet ist. Der Druckbehälter 1 der FIG 1 ist ein Gehäuse eines Turboverdichters 4, dessen Rotor 5 sich durch den Deckel 3 hindurch erstreckt. Diese Turbomaschine 6 weist außerdem eine Einströmspirale 7 auf, welche einstückig mit dem Deckel 3 ausgebildet ist..Daneben ist der Deckel 3 außerdem Träger eines Radiallagers 8 sowie einer Wellendichtung 9 den Rotor 5 lagernd bzw. zum Rotor 5 dichtend. Wie es im Einzelnen auch der FIG 3 zu entnehmen ist, weist der Deckel 3 eine erste Anlagefläche 10 auf, die gegenüber einer gegenüberliegenden zweiten Anlagefläche 11 des Druckbehälters 1 mittels eines Befestigungselements 12 verspannt ist. Sowohl die erste Anlagefläche 10 als auch die zweite Anlagefläche 11 erstrecken sich in eine Umfangsrichtung 13 ohne Unterbrechung. Der Deckel 3 weist im Bereich der Deckelaufnahme 2 eine U-förmige Profilkontur 14 auf, deren U-Form radial nach außen offen ist und in welcher ein Formsteg 15 des Druckbehälters 1 hineinragt. Sowohl die Profilkontur 14 als auch der Formsteg 15 erstrecken sich ebenfalls ohne Unterbrechung in Umfangsrichtung. Der Deckel 3 weist auf der nach außen weisenden inneren Seitenfläche der U-Form der Profilkontur 14 die erste Anlagefläche 10 auf und der Formsteg 15 ist auf der gegenüberliegenden, in das Innere des Druckbehälters 1 weisenden Seite mit der zweiten Anlagefläche 11 versehen. Auf der anderen Seite, jenseitig der zweiten Anlagefläche 11 ist der Formsteg 15 als Kontaktfläche 18 ausgebildet, die mit einer Widerlagerfläche 19 auf der gegenüberliegenden Seite der nach innen weisenden seitlichen Fläche der U-Form der Profilkontur 14 zusammenwirkt. Die Widerlagerfläche 19 bildet mit der Kontaktfläche 18 einen Keilspalt 20 mit einem Winkel β.

Das Befestigungselement 12 ist keilförmig ausgebildet, mit einem Keilwinkel α der dem Winkel β des Keilspalts 20 entspricht. Das Befestigungselement 12 weist außerdem die Form eines Ringsegments 22 auf, wobei die keilförmige Querschnittsform sich nach radial ihnen verjüngt. Das Befestigungselement 12 wird im Rahmen der Montage in den Keilspalt 20 eingesetzt und mittels jeweils zweier Schrauben 23, die sich durch eine Durchgangsbohrung nach radial innen durch das Befestigungselement 12 erstrecken und in eine Gewindebohrung auf dem Grunde der Profilkontur 14 eingreifen, an dem Deckel 3 befestigt und gesichert. Über den Umfang der Deckelaufnahme 2 sind mehrere Befestigungselemente 12 angeordnet, so dass sich eine gleichmäßige Krafteinleitung ergibt. Der Druckbehälter 1 weist eine horizontale Teilfuge 25 auf, so dass während der Montage der Deckel 3 derart in das Unterteil des Druckbehälters 1 eingesetzt werden kann, so dass der Formsteg 15 in die Profilkontur 14 eingreift und anschließend das Oberteil des Druckbehälters 1 aufgesetzt werden kann, so dass sich eine zunächst formschlüssige Verankerung des Deckels 3 in dem Druckbehälter 1 ergibt. Zentrierelemente 26 sorgen für eine korrekte radiale Ausrichtung des Deckels 3 zu dem Druckbehälter 1, so dass insbesondere das Radiallager 8 die vorgesehene Position erreicht.

## Patentansprüche

1. Druckbehälter (1) mit einem Deckel (3), insbesondere Druckbehälter (1) einer Turbomaschine (Turboverdichter 4), insbesondere mit einem als Einströmspirale (7) ausgebildeten Deckel (3), welcher Deckel (3) an einer entsprechenden Deckelaufnahme (2) befestigt ist, wobei der Deckel (3) eine sich in Umfangsrichtung erstreckende erste Anlagefläche (10) aufweist, welche mit einer zweiten Anlagefläche (11) an dem Druckbehälter (1) dichtend zusammenwirkt, wobei Befestigungselemente (12) zur Befestigung es Deckels (3) an dem Druckbehälter (1) vorgesehen sind,
**dadurch gekennzeichnet, dass**
die Befestigungselemente (12) keilförmig ausgebildet sind, einerseits an einer Widerlagerfläche (19) des Druckbehälters (1) anliegen und andererseits an einer Kontaktfläche (18) des Deckels (3) anliegen, derart dass eine Verschiebung des Befestigungselements (12) in eine Richtung, dass ein breiterer Abschnitt der Keilform sich zwischen der Widerlagerfläche (19) und der Kontaktfläche (18) befindet, die Anlageflächen (10,11) näher zusammen bringt oder gegeneinander verspannt.

2. Druckbehälter nach Anspruch 1,
**dadurch gekennzeichnet, dass** eine Flächennormale der ernsten Anlagefläche (10) parallel ist zu einer Ebenennormale einer
durch den Umfang des Deckels (3) aufgespannten Ebene.

3. Druckbehälter nach Anspruch 1 oder 2,
**dadurch gekennzeichnet, dass** der Deckel eine sich zumindest abschnittsweise in Umfangsrichtung ersteckende, nach radial außen offene U-förmige Profilkontur (14) aufweist, in welcher sich in zusammengebautem Zustand ein sich zumindest abschnittsweise nach radial innen erstreckender Formsteg (15) des Druckbehälters (1) angeordnet ist, wobei an einer seitlichen Innenseite der U-förmigen Profilkontur (14) die erste Anlagefläche (10) ausgebildet ist und dieser gegenüberliegend die zweite Anlagefläche (11) an dem Formsteg (15) angeordnet ist.

4. Druckbehälter (1) nach Anspruch 3,
**dadurch gekennzeichnet, dass** sich sowohl die
Profilkontur (14) mit der ersten Anlagefläche (10) als auch der Formsteg (15) mit der zweiten Anlagefläche (11) über den gesamten Umfangs des Deckels (3) erstrecken.

5. Druckbehälter (1) nach Anspruch 3 oder 4,
**dadurch gekennzeichnet, dass** das Befestigungselement (12) in der U-Förm der.Profilkontur (14) angeordnet ist und sich die
Kontaktfläche (18) des Deckels (3) an dem Formsteg (15)
jenseits der zweiten Anlagefläche (11) und die Widerlagerfläche (19) des Druckbehälters (1) an der der zweiten Anlagefläche (11) gegenüberliegenden Flanke der U-Form befinden, so dass das Befestigungselement (12) zwischen der Kontaktfläche (18) und der Widerlagerfläche (19) angeordnet ist.

6. Druckbehälter (1) nach mindestens einem der vorhergehenden Ansprüche, **dadurch gekennzeichnet, dass** die
Kontaktfläche (18) und die Widerlagerfläche (19) miteinander einen Keilspalt (20) mit einem dem Keilwinkel (α) des Befestigungselements (12) entsprechenden Winkel (β) bilden.

7. Druckbehälter (1) nach Anspruch 6,
**dadurch gekennzeichnet, dass** das Befestigungselement (12) mindestens eine Schraube (23) aufweist, mittels derer es in den Keilspalt (20) gedrückt und/oder dort gesichert werden kann.

8. Druckbehälter (1) nach mindestens einem der vorhergehenden Ansprüche, **dadurch gekennzeichnet, dass** das Befestigungselement (12) die Form eines Ringsegments (22) aufweist mit keilförmigem Querschnittsprofil, wobei sich die
Keilform nach radial innen verjüngt.

9. Druckbehälter (1) nach mindestens einem der vorhergehenden Ansprüche, **dadurch gekennzeichnet, dass** über dem Umfang entlang der Deckelaufnahme (2) mehrere Befestigungselemente vorgesehen sind.

10. Druckbehälter (1) nach mindestens einem der vorhergehenden Ansprüche, **dadurch gekennzeichnet, dass** der Druckbehälter (1) eine Teilfuge (25) aufweist, welche die Deckelaufnahme zweiteilt.

11. Druckbehälter (1) nach mindestens einem der vorhergehenden Ansprüche, **dadurch gekennzeichnet, dass** die Befestigungselemente (12) außerhalb des Druckbehälters (1) angeordnet sind.

12. Druckbehälter (1) nach mindestens einem der vorhergehenden Ansprüche, **dadurch gekennzeichnet, dass** der Deckel (3) gegenüber dem Druckbehälter (1) mittels Zentrierelementen (26) zentriert ist.

13. Druckbehälter (1) nach mindestens einem der vorhergehenden Ansprüche, **dadurch gekennzeichnet, dass** der Deckel (3) Träger eines Lagers (Radiallager 8) eines sich durch den Deckel (3) erstreckenden Rotors (5) ist.

14. Druckbehälter (1) nach mindestens einem der vorhergehenden Ansprüche, **dadurch gekennzeichnet, dass** der Deckel (3) träger einer Einströmspirale (7) für einen in dem Druckbehälter (1) befindlichen Verdichter (Turbomaschine 6) ist.
